# EUROPÄISCHE PATENTSCHRIFT

(11) **EP 3 256 354 B1**
(45) Veröffentlichungstag und Bekanntmachung des Hinweises auf die Patenterteilung: **12.12.2018**
(21) Anmeldenummer: 16700311.0
(22) Anmeldetag: 12.01.2016
(51) Int. Cl.: B60T 11/232

(54) **HAUPTBREMSZYLINDERANORDNUNG FÜR EINE HYDRAULISCHE KRAFTFAHRZEUGBREMSANLAGE**
MASTER BRAKE CYLINDER ARRANGEMENT FOR A HYDRAULIC MOTOR VEHICLE BRAKE SYSTEM
MAÎTRE-CYLINDRE DE FREIN DESTINÉ À UN SYSTÈME DE FREINAGE HYDRAULIQUE D'UN VÉHICULE AUTOMOBILE

(30) Priorität: 12.02.2015 DE 102015001860
(43) Veröffentlichungstag der Anmeldung: 20.12.2017
(73) Patentinhaber: Lucas Automotive GmbH, 56070 Koblenz (DE)
(72) Erfinder: WOLF, Matthias, 56077 Koblenz (DE); STRUSCHKA, Martin, 56338 Braubach (DE)
(74) Vertreter: Schmidt, Steffen J.
(86) Internationale Anmeldenummer: PCT/EP2016/050413
(87) Internationale Veröffentlichungsnummer: WO 2016/128159

(56) Entgegenhaltungen:
- EP-A1- 2 165 897
- DE-A1-102004 057 253
- DE-A1-102009 052 568

## Beschreibung

Die Erfindung betrifft eine Hauptbremszylinderanordnung für eine hydraulische Kraftfahrzeugbremsanlage, umfassend ein Hauptbremszylindergehäuse mit einer zylindrischen Ausnehmung und mindestens einer quer bezüglich einer Längsachse der zylindrischen Ausnehmung ausgerichteten, im Wesentlichen ringförmigen Nut, wobei die Nut axial von einem vorstehenden Gehäuseabschnitt begrenzt ist, und mindestens einen in der zylindrischen Ausnehmung des Hauptbremszylindergehäuses axial verlagerbaren, mittels mindestens einem Dichtelement dichtend geführten Druckkolben, wobei das Dichtelement in der Nut angeordnet ist. Der Gehäuseabschnitt weist dabei in einem achsenthaltenden Längsschnitt betrachtet einen dem Dichtelement zugewandten Kantenabschnitt und einen von dem Dichtelement abgewandten Kantenabschnitt auf.

Eine derartige Hauptbremszylinderanordnung ist beispielsweise aus dem Dokument DE 10 2004 057 253 A1 bekannt. Bei dem darin beschriebenen Hauptbremszylinder ist in einem Zylinderkörper ein Primärkolben und vor dem Primärkolben ein Sekundärkolben verschiebbar aufgenommen. In jeweiligen Nuten, die in einer Innenwand des Zylinderkörpers ausgebildet sind, sind Primärmanschetten, eine Sekundärmanschette und eine Druckmanschette aufgenommen. An der Innenwand des Zylinderkörpers sind hinter den jeweiligen Primärmanschetten ringförmige Wandabschnitte einstückig ausgebildet, um die Primärmanschetten individuell zu stützen.

Bei aus dem Stand der Technik bekannten Hauptbremszylinderanordnungen besteht in einem Ausgangszustand vor Betätigung der Bremse, in dem der Druckkolben über eine Rückstellfeder in eine Ruhelage vorgespannt ist, eine fluidische Verbindung zwischen einer von dem Druckkolben begrenzten Druckkammer und einem mit der zylindrischen Ausnehmung fluidisch gekoppelten Fluidreservoir. Diese fluidische Verbindung wird über Bohrungen in einem hohlzylindrischen Abschnitt des Druckkolbens gewährleistet. Im Ausgangszustand ist der Druckkolben derart positioniert, dass die Bohrungen in Axialrichtung zwischen zwei den Druckkolben umgebenden Dichtelementen (Dichtmanschetten) positioniert sind.

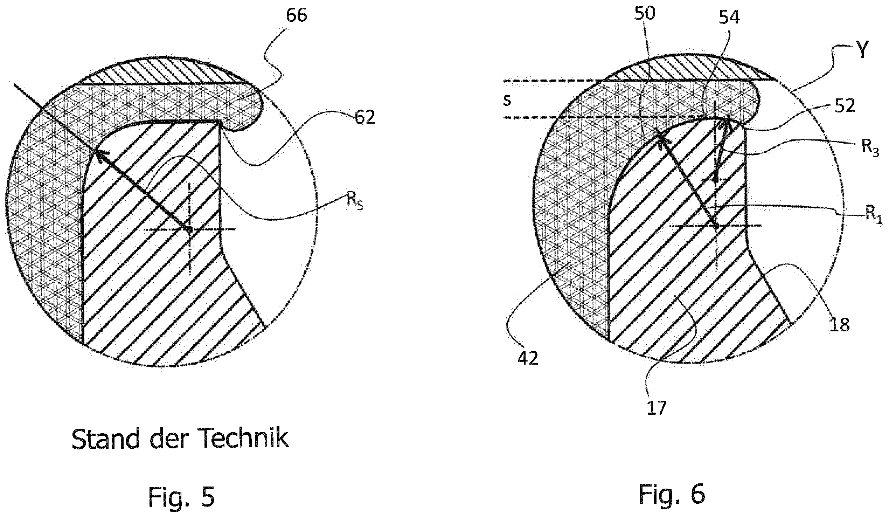

Zu Beginn einer Bremsbetätigung wird der Druckkolben mit einer externen Kraft beaufschlagt, durch die er aus seiner Ruhelage in Richtung der Druckkammer ausgelenkt wird. Das Volumen der Druckkammer wird hierdurch stetig verringert, sodass Bremsfluid aus der Druckkammer durch die Bohrungen in das Fluidreservoir entweicht. Sobald die Bohrungen das Dichtelement erreichen, wird die Durchströmung der Bohrungen zum Fluidreservoir behindert und der Druck in der Druckkammer steigt allmählich, bis die Bohrungen vollständig durch das Dichtelement abgedichtet sind (sog. "verzögerter Druckaufbau"). Mit zunehmendem Druck wird das Dichtelement aufgrund des erhöhten Fluiddrucks in der Druckkammer elastisch deformiert, wobei es den Spalt zwischen dem Druckkolben und dem vorstehenden Gehäuseabschnitt je nach herrschendem Fluiddruck zumindest teilweise durchsetzt. Bei hohen Bremsdrücken, welche beispielsweise bei Notbremsungen auftreten können, kann es sogar vorkommen, dass das Dichtelement den Spalt nicht nur vollständig füllt, sondern teilweise über das Ende des Spalts hinaus gepresst wird. Diese Situation ist stark schematisiert in Figur 5 dargestellt.

Sobald die Bremse wieder freigegeben wird, wird der Druckkolben mittels der Rückstellfeder in seiner Ruhelage zurückverlagert. Dadurch vergrößert sich das Volumen des Druckraums, der darin herrschende Druck sinkt und Hydraulikfluid strömt zurück in den Druckraum, sobald die im Druckkolben ausgebildeten Bohrungen von dem Dichtelement freigegeben werden. Insbesondere bei schnellen Rückstellvorgängen des Druckkolbens kann es jedoch bei der Rückstellung vorkommen, dass sich der durch den Spalt zwischen dem Druckkolben und der radial inneren Wand der Hauptbremszylindergehäuses hindurchgedrückte Teil des Dichtelements langsamer kontrahiert, als sich der Druckkolben zurückbewegt. Die in diesem Fall in dem Dichtelement wirkenden Spannungen können eine Beschädigung des Dichtelements zur Folge haben.

Um diesem Problem zu begegnen, ist es aus dem Stand der Technik bekannt, die dem Dichtelement abgewandte Kante des vorstehenden Gehäuseabschnitts abzuschrägen. Eine derartige Ausgestaltung kann sich jedoch nachteilig auf die Präzision der Wirkung der Kraftfahrzeugbremsanlage auswirken. Insbesondere kann dies dazu führen, dass der Druckaufbau im Druckraum im Verhältnis zur Kolbenbewegung erst spät beginnt und sich damit ein relativ großer Leerweg des Bremskolbens einstellt. Um diesen Leerweg zu überwinden, müsste der Fahrzeugführer das Bremspedal/den Bremshebel vergleichsweise weit aus seiner Ruhestellung auslenken, bevor eine Bremswirkung eintritt.

Es ist daher eine Aufgabe der vorliegenden Erfindung, eine Hauptbremszylinderanordnung der eingangs bezeichneten Art bereitzustellen, die langlebig ist und zugleich ein direktes Bremsgefühl vermittelt.

Diese Aufgabe wird durch eine Hauptbremszylinderanordnung der eingangs bezeichneten Art gelöst, bei der der dem Dichtelement zugewandte Kantenabschnitt und der dem Dichtelement abgewandte Kantenabschnitt in dem achsenthaltenden Längsschnitt betrachtet eine, vorzugsweise harmonisch, gekrümmte Kontur aufweist. Der dem Dichtelement zugewandte Kantenabschnitt und der dem Dichtelement abgewandte Kantenabschnitt sind dabei unterschiedlich stark gekrümmt. Insbesondere kann vorgesehen sein, dass der dem Dichtelement abgewandte Kantenabschnitt stärker gekrümmt ist als der dem Dichtelement zugewandte Kantenabschnitt.

Im Kontext der vorliegenden Anmeldung beziehen sich die Ausdrücke "dem Dichtelement zugewandter/abgewandter Kantenabschnitt" auf das Dichtelement im Ausgangszustand (d.h. im nicht-deformierten Zustand), in dem das Dichtelement in der Nut angeordnet und weitgehend unbelastet ist. In diesem Zustand erstreckt sich das Dichtelement insbesondere nicht in den Spalt zwischen dem vorstehenden Gehäuseabschnitt und der Wand der zylindrischen Ausnehmung.

Die erfindungsgemäße Ausgestaltung der Hauptbremszylinderanordnung bietet insbesondere den Vorteil, dass das Dichtelement nicht an scharfen Kanten beschädigt wird. Darüber hinaus ermöglicht eine derartige Ausgestaltung, dass sich der Staudruck an der Engstelle zwischen Druckkolben und vorstehendem Gehäuseabschnitt relativ zügig ausbildet, sodass der Druckaufbau spontan in Antwort auf die Kolbenbewegung beginnt. Ein großer Leerweg wird also vermieden. Die Kombination zweier gekrümmter Kantenabschnitte wirkt sich insofern synergetisch aus, als dass einerseits das Dichtelement davor bewahrt wird, aufgrund hoher Spannungen zwischen dem Druckkolben und dem vorstehenden Gehäuseabschnitt beschädigt zu werden, und andererseits die auf der dem Dichtelement abgewandten Seite des vorstehenden Gehäuseabschnitts vorgesehene Krümmung derart angepasst sein kann, dass der Druck in der Druckkammer schon bei geringen Druckkolbenauslenkungen steigt. Das heißt, die Verzögerung des Druckanstiegs wird vergleichsweise gering gehalten. Ferner kann die axiale Länge des Gehäuseabschnitts kurz gehalten werden, sodass die Hauptbremszylinderanordnung wenig Bauraum erfordert.

Erfindungsgemäß können der vorstehende Gehäuseabschnitt und/oder die Nut ebenfalls parallel zueinander und/oder quer zur Längsachse der zylindrischen Ausnehmung ausgerichtet sein, insbesondere im rechten Winkel zur Längsachse der zylindrischen Ausnehmung verlaufen. Die im achsenthaltenden Längsschnitt gekrümmte (d. h. gerundete) Kontur des dem Dichtelement zugewandten Kantenabschnitts und/oder des dem Dichtelement abgewandten Kantenabschnitts ist in dem achsenthaltenden Längsschnitt betrachtet vorzugsweise kreisförmig. Alternativ kann es erfindungsgemäß vorgesehen sein, dass die Kontur/en im achsenthaltenden Längsschnitt betrachtet zumindest abschnittsweise, insbesondere vollständig parabelförmig oder andersförmig harmonisch gerundet ausgestaltet sind. Bei all diesen Ausgestaltungen ist der vorstehende Gehäuseabschnitt frei von stufigen Übergängen der scharfen Kanten. Gleichzeitig lassen sich Hauptbremszylindergehäuse mit einem derartigen Gehäuseabschnitt vergleichsweise kostengünstig herstellen.

Wenn die Konturen kreisförmig ausgestaltet sind, kann der dem Dichtelement zugewandte Kantenabschnitt insbesondere einen ersten Krümmungsradius aufweisen, der mindestens das Fünffache, beispielsweise das Zehnfache, eines zweiten Krümmungsradius beträgt, den der dem Dichtelement abgewandte Kantenabschnitt aufweist. Mittels CFD- (Computational Fluid Dynamics) Simulationen konnte ermittelt werden, dass das der Erfindung zu Grunde liegende Problem besonders vorteilhaft gelöst wird, wenn der vorstehende Gehäuseabschnitt des Hauptbremszylindergehäuses eine axiale Länge zwischen 0,6 und 1,0 mm aufweist und der Spalt zwischen dem Druckkolben und dem Gehäuseabschnitt (in radialer Richtung) an der engsten Stelle zwischen 0,07 und 0,2 mm breit ist. Der erste und der zweite Krümmungsradius beträgt in diesem Fall vorzugsweise entsprechend 0,5 bis 0,8 mm und 0,04 bis 0,1 mm. Bei einer Ausführungsvariante ist der Spalt an der engsten Stelle 0,16 und 0,11 mm breit, der Gehäuseabschnitt in axialer Richtung 0,9 mm lang und der erste und zweite Krümmungsradius betragen entsprechend 0,7 mm und 0,05 mm. Bei dieser erfindungsgemäßen Ausführungsform ist der erste Krümmungsradius 14 Mal so groß wie der zweite Krümmungsradius.

In einer weiteren Ausführungsform der Erfindung ist das Dichtelement zumindest abschnittsweise aus einem viskoelastischen Material hergestellt. Viskoelastische Materialien zeichnen sich dadurch aus, dass sie bei Beaufschlagung mit einer Kraft elastisch deformiert werden und fließen. Das Dichtelement kann beispielsweise vollständig aus dem viskoelastischen Material bestehen. Es kann jedoch auch nur in dem gegenüber dem Druckkolben benachbarten Bereich viskoelastisch sein. Beispielsweise kann es sich bei dem viskoelastischen Material um ein Gummimaterial handeln. Ein derartiges Dichtelement ist vergleichsweise leicht und kostengünstig in großen Stückzahlen herstellbar. Die erfindungsgemäße Ausgestaltung des vorstehenden Gehäuseabschnitts ermöglicht dabei, das Dichtelement flexibler, beispielsweise universeller auszugestalten. Insbesondere kann aufgrund des Zusammenwirkens der gerundeten Konturen der Kantenabschnitte auch ein vergleichsweise weiches Gummimaterial verwendet werden, welches den Druckkolben gegenüber dem Hauptbremszylindergehäuse bereits bei vergleichsweise niedrigen in der Druckkammer vorherrschenden Drücken zuverlässig abdichtet. Insbesondere aufgrund der Fließwirkung kann das Dichtelement tief in den Spalt zwischen dem vorstehenden Gehäuseabschnitt und dem Druckkolben eindringen. Das Ausmaß des Fließens des Dichtelements wird erfindungsgemäß maßgeblich durch die Geometrie der das Dichtelement begrenzenden Bauteile, also durch den Umfang des Druckkolbens sowie die Kontur und Größe des Gehäuseabschnitts, bestimmt.

In einer Weiterbildung der Erfindung ist auf einer der Nut abgewandten Seite des die Nut begrenzenden, vorstehenden Gehäuseabschnitts eine weitere Nut in dem Hauptbremszylindergehäuse ausgebildet. Diese weitere Nut ist mit einem Fluidausgleichsbehälteranschluss in Strömungsverbindung bringbar. Insbesondere kann zwischen dieser weiteren Nut und dem Fluidausgleichsbehälteranschluss eine Bohrung in dem Hauptbremszylindergehäuse ausgebildet sein, durch die das aus der Druckkammer durch die Bohrungen im Kolbenhemd des Druckkolbens entweichende Fluid in den Fluidausgleichsbehälter verdrängt werden kann.

Ferner kann erfindungsgemäß vorgesehen sein, dass der dem Dichtelement zugewandte Kantenabschnitt an den dem Dichtelement abgewandten Kantenabschnitt an grenzt. Mit anderen Worten, der dem Dichtelement zugewandte Kantenabschnitt geht fließend in den dem Dichtelement abgewandten Kantenabschnitt über. Vorzugsweise ist der Übergang stufenfrei. Dadurch wird gewährleistet, dass das Dichtelement den Spalt zwischen dem Druckkolben und der radial inneren Wand der zylindrischen Ausnehmung wirkungsvoll abdichten kann, sodass keine Fluidleckage aus dem Druckraum, beispielsweise in den Fluidausgleichsbehälter, erfolgt. Auf diese Weise wird auch sichergestellt, dass möglichst wenig Volumen des Dichtelements selbst bei hohen auf den Druckkolben wirkenden Kräften über den vorstehenden Gehäuseabschnitt hinwegsteht und den Fluidausgleichsbehälteranschluss blockiert.

Wenn der dem Dichtelement zugewandte Kantenabschnitt an den dem Dichtelement abgewandten Kantenabschnitt angrenzt, ist erfindungsgemäß außerdem vorgesehen, dass die Grenze zwischen den beiden Kantenabschnitten in Axialrichtung an derjenigen Stelle im achsenthaltenden Längsschnitt angeordnet ist, an der der Spalt zwischen dem vorstehenden Gehäuseabschnitt und der äußeren Umfangsfläche des Druckkolbens am schmalsten ist. Vorzugsweise ist der axiale Abstand zwischen der Grenze und der das Dichtelement aufnehmenden Nut größer als der axiale Abstand zwischen der Grenze und einer der Nut abgewandten Seite des Gehäuseabschnitts.

Beispielsweise kann der Abstand zwischen der Grenze und der Nut etwa Dreiviertel der axialen Länge des vorstehenden Gehäuseabschnitts betragen.

In einer weiteren Ausführungsform der Erfindung ist vorgesehen, dass in Richtung der Längsachse der zylindrischen Ausnehmung zwischen dem dem Dichtelement zugewandten Kantenabschnitt und dem dem Dichtelement abgewandten Kantenabschnitt ein Übergangsabschnitt des Gehäuseabschnitts ausgebildet ist, welcher sich zumindest abschnittsweise, vorzugsweise vollständig, linear und im Wesentlichen parallel zu der Längsachse der zylindrischen Ausnehmung erstreckt. In diesem Übergangsabschnitt ist also die radial innere Wand des Hauptbremszylindergehäuses als Zylindermantelfläche ausgestaltet. Dieser Bereich kann beispielsweise weniger als ein Viertel der axialen Länge des Gehäuseabschnitts lang sein.

Alternativ kann erfindungsgemäß vorgesehen sein, dass der Übergangsabschnitt nicht linear ist, sondern in seinem achsenthaltenden Längsschnitt betrachtet zumindest abschnittsweise eine gekrümmte Kontur aufweist. Vorzugsweise ist in diesem Fall der Übergangsabschnitt stärker als der dem Dichtelement zugewandte Kantenabschnitt gekrümmt, aber schwächer als der dem Dichtelement abgewandte Kantenabschnitt. Dadurch kann insbesondere ein kantenfreier, fließender Übergang zwischen den unterschiedlich gekrümmten Kantenabschnitten realisiert werden. Indem die Werkstoffeigenschaften des Dichtelements und die Form des vorstehenden Gehäuseabschnitts aneinander angepasst werden, können geringe Leerwege realisiert werden. Insbesondere dann, wenn das Dichtelement viskoelastisch ist, kann es sich an den Gehäuseabschnitt anschmiegen und den Spalt zwischen dem Druckkolben und der Wand der zylindrischen Ausnehmung wirkungsvoll abdichten.

Die Erfindung betrifft ferner eine Kraftfahrzeugbremsanlage mit einer Hauptbremszylinderanordnung der vorstehend bezeichneten Art. Die Hauptbremszylinderanordnung der Kraftfahrzeugbremsanlage kann jedes der vorangehend detailliert erläuterten Merkmale aufweisen.

Die Erfindung ist beispielhaft anhand der folgenden Figuren erläutert.

Es stellen dar:
- Figur 1: eine Seitenansicht einer erfindungsgemäßen Hauptbremszylinderanordnung mit Blickrichtung entlang der Längsachse der zylindrischen Ausnehmung;
- Figur 2: eine perspektivische Gesamtansicht der Hauptbremszylinderanordnung aus Figur 1 mit Blickrichtung von seitlich oben;
- Figur 3: eine achsenthaltende Längsschnittansicht der Hauptbremszylinderanordnung aus Figur 1;
- Figur 4a: eine teilweise Detailansicht des mit X bezeichneten Ausschnitts aus Figur 3, in dem der vorstehende Gehäuseabschnitt und die ringförmige Nut abschnittsweise dargestellt sind;
- Figur 4b: eine teilweise Detailansicht des mit Y bezeichneten Ausschnitts aus Figur 4a, in dem der vorstehende Gehäuseabschnitt und die ringförmige Nut abschnittsweise dargestellt sind;
- Figur 5: eine teilweise Detailansicht einer Hauptbremszylinderanordnung nach dem Stand der Technik, in der ein dem Ausschnitt Y entsprechender Ausschnitt gezeigt ist; und
- Figur 6: eine teilweise Detailansicht des mit Y bezeichneten Ausschnitts aus Figur 4a, in dem der vorstehende Gehäuseabschnitt, das Dichtelement, der Druckkolben und die ringförmige Nut abschnittsweise dargestellt sind.

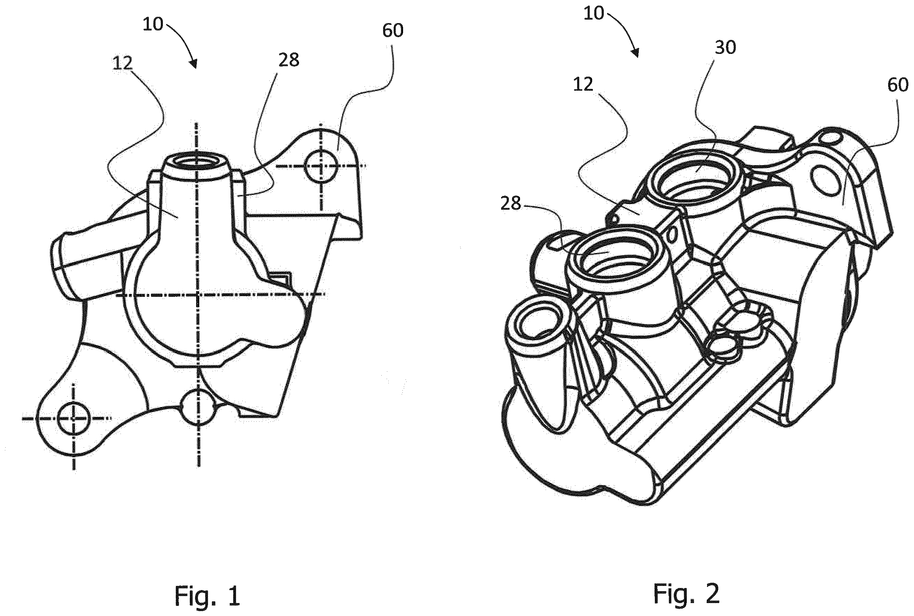

In den Figuren 1 bis 3 sind Gesamtansichten einer erfindungsgemäßen Hauptbremszylinderanordnung 10 für eine hydraulische Kraftfahrzeugbremsanlage gezeigt. Die Hauptbremszylinderanordnung 10 umfasst ein Hauptbremszylindergehäuse 12 mit einer zylindrischen Ausnehmung 14, welches über einen Befestigungsflansch 60 wahlweise unmittelbar oder mittelbar an einem Abschnitt einer Fahrzeugkarosserie anbringbar ist. Beispielsweise kann das Hauptbremszylindergehäuse 12 über den Befestigungsflansch 60 an einem der Hauptbremszylinderanordnung 10 vorgeschalteten Bremskraftverstärker befestigt werden. In dem Hauptbremszylindergehäuse 12 sind sechs Nuten 16, 18, 20, 22, 24, 26 ausgebildet. In jeder der Nuten 16, 20, 22 und 26 ist entsprechend jeweils ein Dichtelement 42, 44, 46, 48 in Form einer Dichtungsmanschette aufgenommen. Die Nuten sind axial voneinander beabstandet angeordnet.

Die Nuten 18 und 24, in welchen kein Dichtelement angeordnet ist, sind zwischen den Nuten 16 und 20 bzw. 22 und 26 ausgebildet. Diese Nuten 18 und 24 stehen mit jeweils einem Fluidausgleichsbehälteranschluss (sogenannter Reservoiranschlussport) 28, 30 in Strömungsverbindung. Alle Nuten 16, 18, 20, 22, 24, 26 sind von vorstehenden Gehäuseabschnitten (in Axialrichtung, zumindest auf einer Seite) begrenzt. Insbesondere ist die Nut 16 von dem Gehäuseabschnitt 17 begrenzt, welcher axial zwischen der Nut 16 und der Nut 18 angeordnet ist, und der vorstehende Gehäuseabschnitt 19 begrenzt jede der Nuten 18 und 20. Ferner begrenzt der vorstehende Gehäuseabschnitt 23 jede der Nuten 22 und 24 und der vorstehende Gehäuseabschnitt 25 jede der Nuten 24 und 26.

Bei der in den Figuren gezeigten Hauptbremszylinderanordnung 10 handelt es sich um eine sogenannte Tandem-Hauptbremszylinderanordnung, welche für zwei Bremskreise vorgesehen ist, die über dasselbe Bremspedal bzw. denselben Bremshebel betätigt werden. Dementsprechend umfasst die Hauptbremszylinderanordnung 10 zwei in der zylindrischen Ausnehmung 14 des Hauptbremszylindergehäuses 12 axial entlang einer Längsachse A verlagerbare Druckkolben 32, 36, die im gezeigten Ausführungsbeispiel nur teilweise gezeigt sind und im Wesentlichen gleich ausgebildet sind. Beide Druckkolben 32, 36 erstrecken sich axial in der zylindrischen Ausnehmung und weisen jeweils an ihren Umfangsflächen mehrere gleiche Bohrungen 38 auf, welche benachbart zu dem einer Druckkammer 40 zugewandten Ende des jeweiligen Druckkolbens angeordnet sind. Der Druckkolben 32 ist mittels der Dichtelemente 42, 44 und der Druckkolben 36 ist mittels der Dichtelemente 46, 48 dichtend geführt.

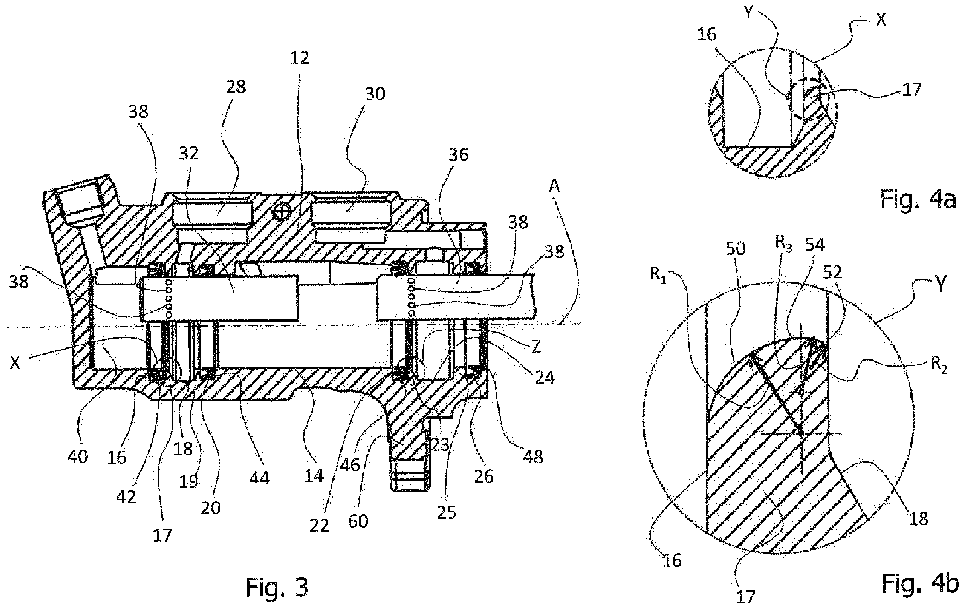

Die Figur 4a stellt den in Figur 3 strichpunktartig umrandeten Bereich X und die Figur 4b stellt den in Figur 4a mit unterbrochener Linie umrandeten Bereich Y vergrößert dar. Der strichpunktartig umrandete Bereich Z aus Figur 3 ist in den Figuren nicht vergrößert abgebildet und auf diesen Bereich Z wird im Folgenden nicht näher eingegangen. Da die in diesem Bereich Z angeordneten Teile der Hauptbremszylinderanordnung 10 gleich ausgestaltet sind wie die im Bereich X angeordneten Teile, gelten die im Folgenden mit Bezug auf den Ausschnitt X gemachten Ausführungen für den Bereich Z entsprechend. Da insbesondere die (vorstehenden) Gehäuseabschnitte 17 und 23 im Wesentlichen gleich ausgestaltet sind, wird im Folgenden nur die Funktion des die Nuten 16 und 18 begrenzenden Gehäuseabschnitts 17 weiter erläutert; für den die Nuten 22 und 24 begrenzenden Gehäuseabschnitt 23 gelten die Ausführen entsprechend.

Wie aus den Figuren 3, 4a und 4b zu erkennen ist, weist der vorstehende Gehäuseabschnitt 17 einen dem Dichtelement zugewandten Kantenabschnitt 50 (in den Figuren links) und einen dem Dichtelement abgewandten Kantenabschnitt 52 (in den Figuren rechts) auf. In den Figuren 4a und 4b ist das Dichtelement 16 jeweils nicht gezeigt. Entsprechend der nur partiellen Darstellung des Druckkolbens 32 in Figur 3 ist der Druckkolben in den Figuren 4a und 4b ebenfalls nicht dargestellt. Zur Verdeutlichung der Anordnung von Druckkolben, Dichtelement und Gehäuseabschnitt wird entsprechend auf Figur 6 verwiesen, welche denselben Bereich der Hauptbremszylinderanordnung 10 schnittbildlich darstellt.

Die Figuren 4b und 6 zeigen, dass der in den Figuren rechte (d.h. der dem Dichtelement 42 abgewandte) Kantenabschnitt 52 stärker gekrümmt als der in den Figuren linke (der dem Dichtelement 42 zugewandte) Kantenabschnitt 50. Wie bereits erläutert, wird dabei auf die Gestalt und Anordnung des Dichtelements 42 im undeformierten Zustand Bezug genommen, in dem sich das Dichtelement 42 insbesondere nicht über die Seitenränder der Nut 16 hinaus erstreckt. Die Krümmungen der Kantenabschnitte 50 und 52 sind in den Figuren kreisförmig dargestellt. Dementsprechend weist der dem Dichtelement zugewandte Kantenabschnitt 50 in dem Längsschnitt aus den Figuren 4b und 6 eine Kontur mit einem ersten Krümmungsradius R₁ und der dem Dichtelement 42 abgewandte Kantenabschnitt 52 eine Kontur mit einen zweiten Krümmungsradius R₂ auf. In der in den Figuren gezeigten Hauptbremszylinderanordnung 10 beträgt der Krümmungsradius R₁ etwa das Vierzehnfache des zweiten Krümmungsradius R₂. Insbesondere beträgt der Krümmungsradius R₁ 0,7 mm und der Krümmungsradius R₂ 0,05 mm. Die Figuren sind zur klaren Visualisierung nicht maßstabsgetreu dargestellt.

Das Dichtelement 42 besteht vollständig aus einem viskoelastischen Gummi, sodass ein Teil des Dichtelements in Folge der Druckbeaufschlagung des in der Druckkammer 40 vorliegenden Fluids in den Spalt zwischen dem Druckkolben 32 und dem Gehäuseabschnitt 17 eindringt. Der Spalt weist eine radiale Breite s von 0,11 mm auf. Somit befindet sich ein Teil des Dichtelements im druckbeaufschlagten Zustand der Druckkammer 40 zwischen den Kantenabschnitten 50, 52 und dem Druckkolben 32.

In der Hauptbremszylinderanordnung 10 ist in Richtung der Längsachse A zwischen dem dem Dichtelement zugewandten Kantenabschnitt 50 und dem dem Dichtelement abgewandten Kantenabschnitt 52 ein Übergangsabschnitt 54 des Gehäuseabschnitts 17 ausgebildet. In der achsenthaltenden Längsschnittansicht der Figuren 4b und 6 weist die Kontur dieses Übergangsabschnitts 54 einen dritten Krümmungsradius R₃ auf, welcher größer als der Krümmungsradius R₂, aber kleiner als der Krümmungsradius R₁ ist. Die Übergänge zwischen den Kantenabschnitten und dem Übergangsabschnitt 54 sind jeweils fließend. Die Mantelfläche des Gehäuseabschnitts 17 ist im Wesentlichen stufen- und kantenfrei.

Alternativ kann der Übergangsabschnitt 54 linear, d. h. ungekrümmt, ausgestaltet sein, sich insbesondere parallel zu der Längsachse A erstrecken. In dieser in den Figuren nicht dargestellten Ausführungsform erstreckt sich der Kantenabschnitt 50 im Wesentlichen um einen Viertelkreisbogen. Aufgrund der kreisförmigen Krümmung der Abschnitte 50 und 52 im achsenthaltenden Längsschnitt ist auch in dieser Ausführungsform ein stufenloser Übergang zwischen den Kantenabschnitten realisierbar. Gleichermaßen kann auch in einer alternativen Ausführungsform der dem Dichtelement zugewandte Kantenabschnitt 50 an den dem Dichtelement abgewandten Kantenabschnitt 52 unmittelbar angrenzen.

Ein dem Bereich Y entsprechender Bereich einer herkömmlichen Hauptbremszylinderanordnung ist zum Vergleich in Figur 5 gezeigt. In dieser Hauptbremszylinderanordnung ist lediglich der dem Dichtelement 66 zugewandte Kantenabschnitt gekrümmt (Krümmungsradius Rₛ). Jedoch fehlt es an einer Krümmung eines dem Dichtelement abgewandten Kantenabschnitts. Vielmehr ist der dem Dichtelement 66 abgewandte Kantenabschnitt scharfkantig und weist ein rechtwinkliges Profil im achsenthaltenden Längsschnitt auf. Bei einer derartigen Hauptbremszylinderanordnung kann das Dichtelement beispielsweise durch eine schnelle Rückstellung des Druckkolbens 32 in seine Ruhelage beschädigt werden. Insbesondere kann ein über die scharfe Kante 62 überstehender Teil des Dichtelements 66 bei der schnellen Rückstellung des Druckkolbens abgetrennt werden. Durch die erfindungsgemäße Ausgestaltung der Hauptbremszylinderanordnung 10 werden derartige Schäden wirkungsvoll vermieden. Wie aus Figur 6 ersichtlich ist, ist der Gehäuseabschnitt 17 derart ausgestaltet, dass die Gefahr der Beschädigung des Dichtelements infolge einer schnellen Rückstellung des Druckkolbens verringert wird. Das viskoelastische Dichtelement 42 füllt den Spalt zwischen dem Gehäuseabschnitt 17 und dem Druckkolben zwar, erstreckt sich jedoch vorteilhafterweise nur unwesentlich über den linken Rand der rechten Nut 18 hinaus.

## Patentansprüche

1. Hauptbremszylinderanordnung (10) für eine hydraulische Kraftfahrzeugbremsanlage, umfassend:
- ein Hauptbremszylindergehäuse (12) mit einer zylindrischen Ausnehmung (14) und mindestens einer quer bezüglich einer Längsachse (A) der zylindrischen Ausnehmung ausgerichteten, im Wesentlichen ringförmigen Nut (16, 22), wobei die Nut (16, 22) axial von einem vorstehenden Gehäuseabschnitt (17, 23) begrenzt ist, und
- mindestens einen in der zylindrischen Ausnehmung des Hauptbremszylindergehäuses axial verlagerbaren, mittels mindestens einem Dichtelement (42, 46) dichtend geführten Druckkolben (32, 36), wobei das Dichtelement (42, 46) in der Nut (16, 22) angeordnet ist,
wobei der Gehäuseabschnitt in einem achsenthaltenden Längsschnitt betrachtet einen dem Dichtelement zugewandten Kantenabschnitt (50) und einen von dem Dichtelement abgewandten Kantenabschnitt (52) aufweist,
**dadurch gekennzeichnet, dass** der dem Dichtelement zugewandte Kantenabschnitt (50) und der dem Dichtelement abgewandte Kantenabschnitt (52) in dem achsenthaltenden Längsschnitt betrachtet eine gekrümmte Kontur aufweist, wobei der dem Dichtelement zugewandte Kantenabschnitt (50) und der dem Dichtelement abgewandte Kantenabschnitt (52) unterschiedlich stark gekrümmt sind.

2. Hauptbremszylinderanordnung (10) nach Anspruch 1,
**dadurch gekennzeichnet, dass** der dem Dichtelement abgewandte Kantenabschnitt (52) stärker gekrümmt ist als der dem Dichtelement zugewandte Kantenabschnitt (50).

3. Hauptbremszylinderanordnung (10) nach Anspruch 1 oder 2,
**dadurch gekennzeichnet, dass** die Kontur des dem Dichtelement zugewandten Kantenabschnitts (50) und die Kontur des dem Dichtelement abgewandten Kantenabschnitts (52) in dem achsenthaltenden Längsschnitt betrachtet kreisförmig ist.

4. Hauptbremszylinderanordnung (10) nach Anspruch 3,
**dadurch gekennzeichnet, dass** der dem Dichtelement zugewandte Kantenabschnitt (50) einen ersten Krümmungsradius (R₁) und der dem Dichtelement abgewandte Kantenabschnitt (52) einen zweiten Krümmungsradius (R₂) aufweist, wobei der zweite Krümmungsradius (R₂) höchstens ein Fünftel des ersten Krümmungsradius (R₁) beträgt.

5. Hauptbremszylinderanordnung (10) nach einem der vorangehenden Ansprüche,
**dadurch gekennzeichnet, dass** das Dichtelement (42, 46) zumindest abschnittsweise aus einem viskoelastischen Material besteht.

6. Hauptbremszylinderanordnung (10) nach einem der vorangehenden Ansprüche,
**dadurch gekennzeichnet, dass** auf einer der Nut (16, 22) abgewandten Seite des Gehäuseabschnitts (17, 23) eine weitere Nut (18, 24) in dem Hauptbremszylindergehäuse (12) ausgebildet ist, welche mit einem Fluidausgleichsbehälteranschluss (28, 30) in Strömungsverbindung bringbar ist.

7. Hauptbremszylinderanordnung (10) nach einem der vorangehenden Ansprüche,
**dadurch gekennzeichnet, dass** der dem Dichtelement zugewandte Kantenabschnitt (50) an den dem Dichtelement abgewandten Kantenabschnitt (52) angrenzt.

8. Hauptbremszylinderanordnung (10) nach einem der Ansprüche 1 bis 6,
**dadurch gekennzeichnet, dass** in Richtung der Längsachse der zylindrischen Ausnehmung zwischen dem dem Dichtelement zugewandten Kantenabschnitt (50) und dem dem Dichtelement abgewandten Kantenabschnitt (52) ein Übergangsabschnitt (54) des Gehäuseabschnitts (17, 23) ausgebildet ist, der sich zumindest abschnittsweise linear und im Wesentlichen parallel zu der Längsachse der zylindrischen Ausnehmung erstreckt.

9. Hauptbremszylinderanordnung (10) nach einem der Ansprüche 1 bis 6,
**dadurch gekennzeichnet, dass** in Richtung der Längsachse der zylindrischen Ausnehmung zwischen dem dem Dichtelement zugewandten Kantenabschnitt (50) und dem dem Dichtelement abgewandten Kantenabschnitt (52) ein Übergangsabschnitt (54) des Gehäuseabschnitts (17, 23) ausgebildet ist, der in dem achsenthaltenden Längsschnitt betrachtet eine gekrümmte Kontur aufweist, wobei der Übergangsabschnitt stärker als der dem Dichtelement zugewandte Kantenabschnitt (50) und schwächer als der dem Dichtelement abgewandte Kantenabschnitt (52) gekrümmt ist.

10. Kraftfahrzeugbremsanlage mit einer Hauptzylinderbremsanordnung nach einem der vorangehenden Ansprüche.

## Claims

1. Master brake cylinder assembly (10) for a hydraulic motor vehicle brake system, comprising:
- a master brake cylinder housing (12) with a cylindrical recess (14) and at least one substantially annular groove (16, 22), which is oriented across a longitudinal axis (A) of the cylindrical recess, wherein the groove (16, 22) is axially delimited by a protruding housing portion (17, 23), and
- at least one pressure piston (32, 36), which can be displaced axially in the cylindrical recess of the master brake cylinder housing and is guided in a sealed manner by means of at least one seal element (42, 46), wherein the seal element (42, 46) is arranged in the groove (16, 22),
wherein the housing portion has an edge portion (50) facing the seal element and an edge portion (52) facing away from the seal element when viewed in an axis-containing longitudinal section,
**characterised in that** the edge portion (50) facing the seal element and the edge portion (52) facing away from the seal element have a curved contour when viewed in the axis-containing longitudinal section, wherein the edge portion (50) facing the seal element and the edge portion (52) facing away from the seal element have differently strong curvatures.

2. Master brake cylinder assembly (10) according to claim 1, **characterised in that** the edge portion (52) facing away from the seal element is more strongly curved than the edge portion (50) facing the seal element.

3. Master brake cylinder assembly (10) according to claim 1 or 2, **characterised in that** the contour of the edge portion (50) facing the seal element and the contour of the edge portion (52) facing away from the seal element are circular when viewed in the axis-containing longitudinal section.

4. Master brake cylinder assembly (10) according to claim 3, **characterised in that** the edge portion (50) facing the seal element has a first radius of curvature (R₁) and the edge portion (52) facing away from the seal element has a second radius of curvature (R₂), wherein the second radius of curvature (R₂) is at most a fifth of the first radius of curvature (R₁).

5. Master brake cylinder assembly (10) according to one of the preceding claims, **characterised in that** the seal element (42, 46) consists at least in portions of a viscoelastic material.

6. Master brake cylinder assembly (10) according to one of the preceding claims, **characterised in that** on a side of the housing portion (17, 23) facing away from the groove (16, 22), a further groove (18, 24) is formed in the master brake cylinder housing (12), which can be brought into flow connection with a fluid compensating reservoir port (28, 30).

7. Master brake cylinder assembly (10) according to one of the preceding claims, **characterised in that** the edge portion (50) facing the seal element adjoins the edge portion (52) facing away from the seal element.

8. Master brake cylinder assembly (10) according to one of claims 1 to 6, **characterised in that** a transition portion (54) of the housing portion (17, 23) is formed in the direction of the longitudinal axis of the cylindrical recess between the edge portion (50) facing the seal element and the edge portion (52) facing away from the seal element, which transition portion extends at least in portions in a linear manner and substantially parallel to the longitudinal axis of the cylindrical recess.

9. Master brake cylinder assembly (10) according to one of claims 1 to 6, **characterised in that** a transition portion (54) of the housing portion (17, 23) is formed in the direction of the longitudinal axis of the cylindrical recess between the edge portion (50) facing the seal element and the edge portion (52) facing away from the seal element, which transition portion has a curved contour when viewed in the axis-containing longitudinal section, wherein the transition portion is curved more strongly than the edge portion (50) facing the seal element and more weakly than the edge portion (52) facing away from the seal element.

10. Motor vehicle brake system with a master brake cylinder assembly according to one of the preceding claims.

## Revendications

1. Ensemble maître-cylindre de frein (10) pour un système de freinage hydraulique de véhicule automobile, comprenant :
- un carter de maître-cylindre de frein (12) comportant un évidement cylindrique (14) et au moins une rainure (16, 22) sensiblement annulaire, orientée transversalement à un axe longitudinal (A) de l'évidement cylindrique, la rainure (16, 22) étant limitée axialement par une partie de carter en saillie (17, 23), et
- au moins un piston de compression (32, 36) déplaçable axialement dans l'évidement cylindrique du carter de maître-cylindre de frein et guidé de manière étanche au moyen d'au moins un élément d'étanchéité (42, 46), l'élément d'étanchéité (42, 46) étant disposé dans la rainure (16, 22),
dans lequel la partie de carter présente, vue dans une coupe longitudinale contenant l'axe, une partie de bord (50) faisant face à l'élément d'étanchéité et une partie de bord (52) opposée à l'élément d'étanchéité,
**caractérisé en ce que** la partie de bord (50) faisant face à l'élément d'étanchéité et la partie de bord (52) opposée à l'élément d'étanchéité présentent, vues dans la coupe longitudinale contenant l'axe, un contour courbe, la partie de bord (50) faisant face à l'élément d'étanchéité et la partie de bord (52) opposée à l'élément d'étanchéité présentant des rayons de courbure différents.

2. Ensemble maître-cylindre de frein (10) selon la revendication 1,
**caractérisé en ce que** la partie de bord (52) opposée à l'élément d'étanchéité est plus fortement courbée que la partie de bord (50) faisant face à l'élément d'étanchéité.

3. Ensemble maître-cylindre de frein (10) selon la revendication 1 ou 2,
**caractérisé en ce que**, vus dans la coupe longitudinale contenant l'axe, le contour de la partie de bord (50) faisant face à l'élément d'étanchéité et le contour de la partie de bord (52) opposée à l'élément d'étanchéité sont circulaires.

4. Ensemble maître-cylindre de frein (10) selon la revendication 3,
**caractérisé en ce que** la partie de bord (50) faisant face à l'élément d'étanchéité présente un premier rayon de courbure (R₁) et la partie de bord (52) opposée à l'élément d'étanchéité présente un second rayon de courbure (R₂), le second rayon de courbure (R₂) étant d'au plus un cinquième du premier rayon de courbure (R₁).

5. Ensemble maître-cylindre de frein (10) selon l'une des revendications précédentes,
**caractérisé en ce que** l'élément d'étanchéité (42, 46) est constitué, au moins dans certaines zones, d'un matériau viscoélastique.

6. Ensemble maître-cylindre de frein (10) selon l'une des revendications précédentes,
**caractérisé en ce qu'**une autre rainure (18, 24) est formée dans le carter de maître-cylindre de frein (12) sur un côté de la partie de carter (17, 23) opposé à la rainure (16, 22), laquelle rainure (18, 24) pouvant être mise en liaison d'écoulement avec un raccord de réservoir de compensation de fluide (28, 30).

7. Ensemble maître-cylindre de frein (10) selon l'une des revendications précédentes,
**caractérisé en ce que** la partie de bord (50) faisant face à l'élément d'étanchéité est contiguë à la partie de bord (52) opposée à l'élément d'étanchéité.

8. Ensemble maître-cylindre de frein (10) selon l'une des revendications 1 à 6,
**caractérisé en ce qu'**une partie de transition (54) de la partie de carter (17, 23) est formée entre la partie de bord (50) faisant face à l'élément d'étanchéité et la partie de bord (52) opposée à l'élément d'étanchéité dans la direction de l'axe longitudinal de l'évidement cylindrique, laquelle partie de transition (54) s'étendant au moins dans certaines zones de manière linéaire et sensiblement parallèle à l'axe longitudinal de l'évidement cylindrique.

9. Ensemble maître-cylindre de frein (10) selon l'une des revendications 1 à 6,
**caractérisé en ce qu'**une partie de transition (54) de la partie de carter (17, 23) est formée entre la partie de bord (50) faisant face à l'élément d'étanchéité et la partie de bord (52) opposée à l'élément d'étanchéité dans la direction de l'axe longitudinal de l'évidement cylindrique, laquelle partie de transition (54) présentant un contour courbe, vue dans la coupe longitudinale contenant l'axe, la partie de transition étant plus fortement courbée que la partie de bord (50) faisant face à l'élément d'étanchéité et moins fortement courbée que la partie de bord (52) opposée à l'élément d'étanchéité.

10. Système de freinage de véhicule automobile doté d'un ensemble maître-cylindre de frein selon l'une des revendications précédentes.
